# EUROPÄISCHE PATENTSCHRIFT

(11) **EP 2 516 872 B1**
(45) Veröffentlichungstag und Bekanntmachung des Hinweises auf die Patenterteilung: **08.04.2015**
(21) Anmeldenummer: 10810954.7
(22) Anmeldetag: 13.12.2010
(51) Int. Cl.: F16D 3/14, F16D 13/70

(54) **VORRICHTUNG MIT EINER STECKVERBINDUNG**
DEVICE HAVING A PLUG-IN CONNECTION
DISPOSITIF À CONNEXION À FICHES

(30) Priorität: 21.12.2009 DE 102009059736
(43) Veröffentlichungstag der Anmeldung: 31.10.2012
(73) Patentinhaber: Schaeffler Technologies AG & Co. KG, 91074 Herzogenaurach (DE)
(72) Erfinder: EDL, Ralf, 77855 Achern (DE)
(86) Internationale Anmeldenummer: PCT/DE2010/001459
(87) Internationale Veröffentlichungsnummer: WO 2011/076175

(56) Entgegenhaltungen:
- EP-A1- 1 371 867
- EP-A1- 1 843 057
- WO-A2-2007/000140
- DE-A1-102010 022 916
- FR-A1- 2 918 727

## Beschreibung

Die Erfindung betrifft eine Vorrichtung mit einer Steckverbindung zwischen einem antriebsseitigen Bauteil und einem abtriebsseitigen Bauteil eines Antriebsstrangs eines Kraftfahrzeugs, bei welcher zur Bildung der Steckverbindung mittels einer Verzahnung an den Bauteilen eine Außenverzahnung und eine hierzu komplementär ausgebildete Innenverzahnung vorgesehen sind.

Die FR2918727 offenbart eine Vorrichtung gemäß Oberbegriff von Anspruch 1.

Eine Vorrichtung in Form eines Kupplungsaggregats mit einer Steckverbindung in einem Antriebsstrang eines Kraftfahrzeugs ist beispielsweise aus der DE 10 2008 027 443 A1 bekannt. Hierbei ist ein Kupplungsaggregat aus zwei Untereinheiten gebildet, die mittels der Steckverbindung drehschlüssig verbunden sind, so dass vor der Endmontage des Antriebsstrangs eine Untereinheit an der Kurbelwelle der Brennkraftmaschine befestigt und die andere Untereinheit auf einer Getriebeeingangswelle eines Getriebes wie Doppelkupplungsgetriebe aufgenommen oder in anderer Weise am Getriebe befestigt werden kann. Bei der Endmontage werden die Motorbaugruppe mit der Brennkraftmaschine und die Getriebebaugruppe mit dem Getriebe miteinander mittels der Steckverbindung verbunden. Diese ist als Verzahnung ausgebildet, wobei eine Untereinheit eine Innenverzahnung und die andere eine Außenverzahnung aufweist.

Infolge des durch Toleranzen vorgegebenen Umfangsspiels der Verzahnung neigt die Steckverbindung zur Bildung von Geräuschen. Die Verringerung von Toleranzen der Verzahnung erhöht die Herstellungskosten und ist nur teilweise erfolgreich. In der DE 10 2008 027 443 A1 werden zur Dämpfung der Geräusche Kontaktflächen der Verzahnung mit einer Beschichtung versehen.

Die WO 2007/000151 A2 zeigt eine Vorrichtung in Form eines Kupplungsaggregats mit einer zwischen einem Drehschwingungsdämpfer und einer Doppelkupplung wirksam angeordneten Steckverbindung, bei der ein Ausgleich der Toleranzen der Steckverbindung vorgesehen ist, indem zwischen den Zähnen der Innen- und Außenverzahnung ein an der Innenverzahnung angeordneter, in Umfangsrichtung gegenüber dieser vorgespannter Zahnring verspannt ist.

Aufgabe der Erfindung ist die vorteilhafte Weiterbildung von Vorrichtungen mit einer Steckverbindung insbesondere vor dem Hintergrund einem einfachen, mit einer geringen Anzahl gegeneinander beweglich angeordneter Teile auskommenden und kostengünstigen Aufbau zur Kompensation eines Toleranzspiels der Verzahnung der Steckverbindung insbesondere zur Dämpfung von Geräuschen.

Die Aufgabe wird durch eine Vorrichtung mit einer Steckverbindung zwischen einem antriebsseitigen Bauteil und einem abtriebsseitigen Bauteil eines Antriebsstrangs eines Kraftfahrzeugs, bei welcher zur Bildung der Steckverbindung mittels einer Verzahnung an den Bauteilen eine Außenverzahnung und eine hierzu komplementär ausgebildete Innenverzahnung vorgesehen sind, gelöst, wobei radial außerhalb der Verzahnung an einem Bauteil mehrere über den Umfang verteilte, radial nach innen gerichtete, die Verzahnung radial übergreifende Finger vorgesehen sind, die axial in an dem anderen Bauteil vorgesehene, mittels Zungen zumindest teilweise verdeckte Öffnungen unter Bildung einer elastischen Verspanneinrichtung zur Verspannung der Verzahnung eingreifen.

Die Vorrichtung umfasst beispielsweise Kupplungsaggregate mit einer oder mehreren, beispielsweise in einem Gehäuse untergebrachten Doppelkupplungen, Drehschwingungsdämpfer wie Zweimassenschwungräder mit oder ohne Fliehkraftpendel, hydrodynamische Drehmomentwandler, Elektromaschinen für hybridische Antriebsstränge und dergleichen, wobei die Steckverbindung jeweils zwischen zwei Untereinheiten beziehungsweise bei einer Kombination dieser zwischen diesen angeordnet sein kann. Dabei weist ein antriebsseitiges Bauteil den einen Teil und ein abtriebsseitiges Bauteil den anderen Teil der Verzahnung der Steckverbindung auf, wobei die Innenverzahnung antriebsseitig oder abtriebsseitig und die Außenverzahnung entsprechend am anderen Bauteil angeordnet ist. Die Innenverzahnung ist bevorzugt an einem aus einem dicken Stanz-, Guss- oder Schmiedeteil an dessen Innenumfang ohne Umlegung des Innenumfangs angeordnet, während die Außenverzahnung aus einem Bauteil aus Blech mit vergleichsweise dünner Blechstärke hergestellt sein kann, deren Außenumfang axial umgelegt und zu der Außenverzahnung vorzugsweise werkzeugfallend umgeformt ist.

Die radial nach innen erweiterten, mit den Öffnungen des anderen Bauteils die Verspanneinrichtung bildenden Finger sind bevorzugt an dem Bauteil mit der größeren Stärke fest angeordnet, beispielsweise mit diesen vernietet. Dabei hat sich als vorteilhaft erwiesen, wenn die Finger vorzugsweise werkzeugfallend aus einem einzigen Blechteil gebildet sind, das beispielsweise an seinem ringförmigen Außenrand mit einem Bauteil verbunden wie vernietet ist.

Das die Öffnungen enthaltende Bauteil ist vorzugsweise aus Blech gebildet, wobei die Zungen aus den Öffnungen ausgestellt sind, indem die Öffnungen beispielsweise im Wesentlichen rechteckig wie quadratisch ausgebildet sind und eine Seite der Öffnungen mit der aus der Fläche der Öffnung gebildeten Zunge verbunden bleibt. Die Finger und die Zungen sind bezüglich ihrer Anordnung gegen der Zähne der Verzahnung auf dem Umfang der Bauteile so angeordnet, dass die Flanken der Zähne von Innen- und Außenverzahnung mittels der Finger und der Zungen in Umfangsrichtung bevorzugt Zugrichtung des Antriebsstrangs spielfrei aneinander angelegt und verspannt sind. Die Verspannung erfolgt dabei unter Vermeidung zusätzlicher bewegter Teile ausschließlich durch einen elastischen Anlagekontakt der Zungen und Finger. Beispielsweise sind die Zungen bevorzugt in Umfangsrichtung und besonders bevorzugt an den der Zugrichtung des Antriebsstrangs entgegen gesetzten Seiten der Öffnungen mit den Öffnungen verbunden, so dass bei einer Kontaktierung von Fingern und Zungen die Zahnflanken der Innen- und Außenverzahnung in Zugrichtung aneinander gelegt und gegeneinander verspannt werden.

Um eine Endmontage der Vorrichtung und damit der Motorbaugruppe und der Getriebebaugruppe einfach zu gestalten, entspricht eine in Umfangsrichtung vorgesehene Teilung der Finger einer Teilung der Zähne. Auf diese Weise können die beiden Bauteile ohne Lageorientierung bezüglich des Verdrehwinkels dieser zueinander angeordnet werden, so dass eine entsprechende Verdrehung der beiden Bauteile während der Endmontage des Antriebsstrangs entfallen kann. Weiterhin kann zur Einstellung der Montagekraft und der Verspannkraft der Verzahnung die Anzahl der Finger bei gleichbleibender Teilung gegenüber der Anzahl der Öffnungen verringert werden, so dass eine geringere Anzahl von Kontaktstellen zwischen Fingern und Zungen ausgebildet und damit bei verringerter Montagekraft eine gegebenenfalls ausreichend eingestellte Verspannkraft der Verspanneinrichtung vorgesehen werden kann, ohne eine Lageorientierung bereitstellen zu müssen.

Zur weiteren Verminderung der axialen Montagekraft können die Finger eine Einfuhrschräge aufweisen und die Zungen in axiale Richtung schräg gestellt sein, so dass die axiale Bewegung der Finger gegenüber der Zungen im Wesentlichen tangential die Vorspannung der Verzahnung in Umfangsrichtung bewirkt.

Die Vorspannkraft der Verzahnung in Umfangsrichtung wird durch die elastische Verspannung der Finger und der Zungen erzeugt. Hierbei können die Zungen in axiale Richtung elastisch ausgebildet sein. Dadurch weichen die Zungen unter Ausbildung einer Vorspannkraft in Umfangsrichtung bei einem Durchgreifen der Öffnungen durch die Finger auf. Alternativ oder zusätzlich können die Zungen vergleichsweise steif ausgebildet sein und die axial in die Öffnungen eingreifenden Ansätze der Finger in axiale Richtung steif und in radiale Richtung, in Umfangsrichtung und/oder um die Längsachse der Ansätze elastisch ausgebildet sein. Auf diese Weise können die Finger durch die Zungen ausgelenkt werden, was ebenfalls zu einer Verspannung der Verzahnung führenden Relativverdrehung der beiden Bauteile bis zu einem Anschlag der Zahnflanken der Zähne der Innen- und Außenverzahnung führt. Es versteht sich, dass hierzu Finger und Zungen einen entsprechenden elastischen Anteil aufweisen können.

Die Erfindung wird anhand des in den Figuren 1 bis 4 dargestellten Ausführungsbeispiels näher erläutert. Dabei zeigen:
- Figur 1: einen Teilschnitt durch eine Vorrichtung in Form eines Drehschwingungsdämpfers mit einer Reibungskupplung und einer diese drehschlüssig nach der Endmontage verbindenden Steckverbindung,
- Figur 2: ein Detail der Vorrichtung der Figur 1 mit der Steckverzahnung im Schnitt,
- Figur 3: eine Ansicht der Steckverbindung der Figuren 1 und 2
und
- Figur 4: eine Teilabwicklung der Steckverbindung der Figuren 1 bis 3 während drei Montagestufen I bis III.

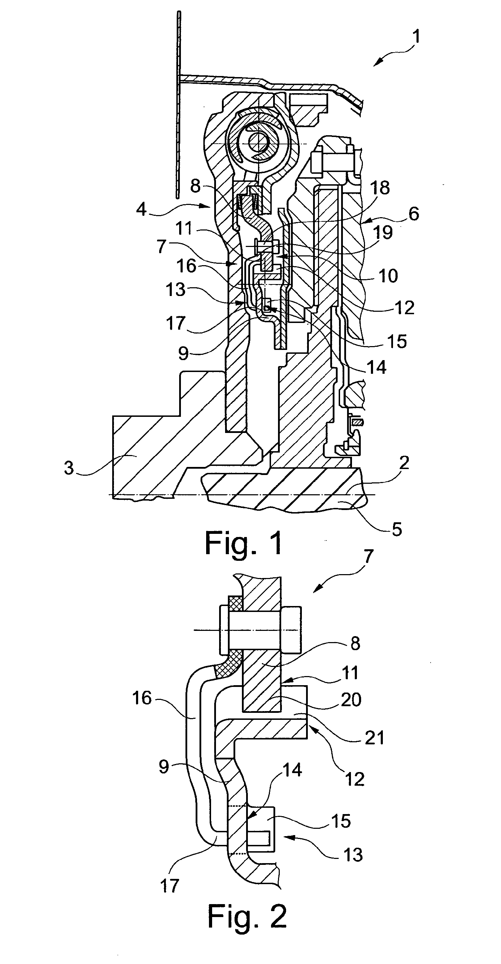

Figur 1 zeigt die um die Drehachse 2 angeordnete Vorrichtung 1 mit dem antriebsseitig an der Kurbelwelle 3 einer Brennkraftmaschine fest aufgenommenen Drehschwingungsdämpfer 4 wie Zweimassenschwungrad und die abtriebsseitig auf der Getriebeeingangswelle 5 eines Getriebes aufgenommene, nur teilweise dargestellte Reibungskupplung 6, die auch eine Doppelkupplung sein kann, im Teilschnitt. Der vor der Endmontage der Vorrichtung 1 und damit des zugehörigen Antriebsstrangs fest auf der motorseitigen Baugruppe auf der Kurbelwelle 3 montierte Drehschwingungsdämpfer 4 und die auf der Getriebeeingangswelle 5 aufgenommene Reibungskupplung 6 werden bei der Endmontage mittels der Steckverbindung 7 drehfest miteinander verbunden. Die Steckverbindung 7 wird aus dem antriebsseitigen Bauteil 8 - hier das Ausgangsteil des Drehschwingungsdämpfers 4 - und dem abtriebsseitigen Bauteil 9 - hier ein mit dem Eingangsteil der Reibungskupplung 6 verbundenes Blechteil - gebildet. Die Steckverbindung 7 wird durch die an dem Bauteil 8 vorgesehene Innenverzahnung 11 und die an dem Bauteil 9 vorgesehene Außenverzahnung 12 gebildete Verzahnung 10 dargestellt.

Infolge der Toleranzen der mit der Innenverzahnung 11 zur Bildung der Verzahnung 10 kämmenden, einen Drehschluss bildenden Außenverzahnung 12 ist die Verzahnung 10 in Umfangsrichtung spielbehaftet. Zur Verhinderung einer Geräuschentwicklung und Verschleiß an den Zähnen dieser ist die Verspanneinrichtung 13 vorgesehen, die die Zahnflanken der Innenverzahnung 11 gegenüber den Zahnflanken der Außenverzahnung 12 in Zugrichtung des Antriebsstrangs und damit in eine Umfangsrichtung der beiden Bauteile 8, 9 verspannt.

Die Verspanneinrichtung 13 wird durch die in das Bauteil 9 eingebrachten Öffnungen 14, die von den Zungen 15 zumindest teilweise verdeckt werden und die über den Umfang verteilten Finger 16, die dem Bauteil 8 wirksam zugeordnet sind, gebildet. Dabei werden die Finger16 einteilig an dem mittels der Niete 18 an dem Bauteil 8 aufgenommenen, ringförmig ausgebildeten Blechteil 19 aufgenommen.

Wie aus der Detaildarstellung der Steckverbindung 7 in Figur 2 hervorgeht, durchgreifen die axialen Ansätze 17 der Finger 16 die Öffnungen 14 axial und stützen sich an den Zungen 15, die in Umfangsrichtung einseitig an einer Seite der Öffnungen 14 befestigt und aus der ausgestellten Fläche der Öffnungen 14 gebildet sind, tangential ab. Durch die die Öffnungen 14 teilverdeckenden Zungen 15, die hierzu teilweise in die Öffnungen 14 eingeschwenkt sind, verdrehen die bei der Endmontage in die Öffnungen 14 eingeführten axialen Ansätze 17 bei Ausbildung eines Kontakts mit den Zungen 15 Bauteil 9 so lange gegenüber dem Bauteil 8, bis die Zahnflanken der Zähne 20 der Innenverzahnung 11 an den Zahnflanken der Zähne 21 der Außenverzahnung 12 in Anlagekontakt gebracht werden. Dabei können die Zungen 15 gegenüber den axialen Ansätzen 17 so elastisch in Umfangsrichtung verspannt werden, dass ein Verspannmoment beziehungsweise eine Verspannkraft der Verspanneinrichtung 13 ausreichend ist, um eine Lösung des Anlagekontakts beispielsweise bei Lastwechseln oder im Schubbetrieb zu verhindern.

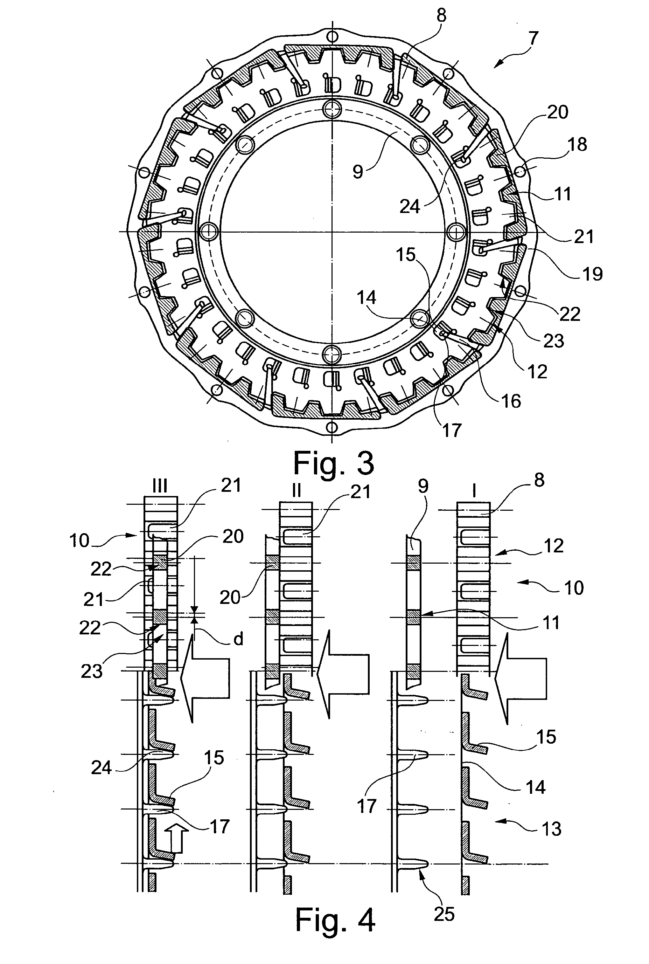

Figur 3 zeigt die Steckverbindung 7 in Ansicht mit dem lediglich teilweise dargestellten, die Innenverzahnung 11 aufweisenden Bauteil 8 und das die Außenverzahnung 12 aufweisende Bauteil 9 aus Sicht des Drehschwingungsdämpfers 4 (Figur 1). Auf dem Bauteil 8 ist das Blechteil 19 mit den Fingern 16 mittels der Niete 18 befestigt. Das Bauteil 9 nimmt mittels der Öffnungen 14 die axialen Ansätze 17 auf, die die teilweise die Öffnungen 14 verdeckenden Zungen 15 so beaufschlagen, dass bei der folgenden Verdrehung der beiden Bauteile 8, 9 gegeneinander die Zahnflanken 22, 23 der Zähne 20, 21 der Innenverzahnung 11 und der Außenverzahnung 12 in Anlagekontakt zueinander treten und dort in Umfangsrichtung durch den elastischen Anlagekontakt 24 der Zungen 15 und Ansätze 17 gegeneinander verspannt bleiben. Dabei werden Zungen 15 in Umfangsrichtung und/oder die axialen Ansätze in Umfangsrichtung verformt und/oder je nach Ausführung des Anlagekontakts 24 um ihre eigene Achse elastisch verdreht.

Die Finger 16 und die Öffnungen 14 weisen dieselbe Teilung auf, wobei nicht an jedem Teilungsabschnitt der Öffnungen 14 ein Finger 16 angeordnet ist. Durch die Anzahl der Finger 16 gegenüber der Anzahl der Öffnungen 14 wird die in Umfangsrichtung wirksame Verspannkraft der Verspanneinrichtung 13 (Figur 1) und die Montagekraft bei der axialen Fixierung der beiden Bauteile 8, 9 aufeinander festgelegt. Infolge derselben Teilung ist eine Lageorientierung nicht nötig. In dem gezeigten Ausführungsbeispiel ist die Besetzung jedes dritten Teilungsabschnitts der Öffnungen 14 mit einem Finger 16 zur Bereitstellung einer ausreichenden Vorspannkraft bei geringer axialer Montagekraft dargestellt.

Figur 4 zeigt eine Teilabwicklung der oben dargestellten Verzahnung 10 und der darunter dargestellten Verspanneinrichtung 13 in einem von rechts nach links über die Montagestufen I bis III ablaufenden Montageprozess.

In der Montagestufe I sind die Bauteile 8, 9 mit der Innenverzahnung 11 und der Außenverzahnung 12 sowie den axialen Ansätzen 17, die eine Einfuhrschräge 25 aufweisen, von den Öffnungen 14 mit den axial schräg angestellten Zungen 15 axial beabstandet. Die Montagestufe II zeigt die axiale Anlage der Innenverzahnung 11 und der Außenverzahnung 12. Dabei sind die Zähne 20, 21 noch mit in beide Umfangsrichtungen gleichen Abständen angeordnet. In der Montagestufe III ist der Zahnschluss der Verzahnung 10 hergestellt. Infolge des Anlagekontakts 24 der axialen Ansätze 17 der Verspanneinrichtung 13 an den Zungen 15 sind die Zähne 20, 21 um das Zahnspiel d gegeneinander in Umfangsrichtung verschoben, so dass deren Zahnflanken 22, 23 aneinander anliegen und in diesem Zustand in Umfangsrichtung durch die Ansätze 17 und die Zungen 15 verspannt bleiben.

### Bezugszeichenliste

- 1: Vorrichtung
- 2: Drehachse
- 3: Kurbelwelle
- 4: Drehschwingungsdämpfer
- 5: Getriebeeingangswelle
- 6: Reibungskupplung
- 7: Steckverbindung
- 8: Bauteil
- 9: Bauteil
- 10: Verzahnung
- 11: Innenverzahnung
- 12: Außenverzahnung
- 13: Verspanneinrichtung
- 14: Öffnung
- 15: Zunge
- 16: Finger
- 17: axialer Ansatz
- 18: Niet
- 19: Blechteil
- 20: Zahn
- 21: Zahn
- 22: Zahnflanke
- 23: Zahnflanke
- 24: Anlagekontakt
- 25: Einfuhrschräge
- I: Montagestufe
- II: Montagestufe
- III: Montagestufe
- d: Zahnspiel

## Patentansprüche

1. Vorrichtung (1) mit einer Steckverbindung (7) zwischen einem antriebsseitigen Bauteil (8) und einem abtriebsseitigen Bauteil (9) eines Antriebsstrangs eines Kraftfahrzeugs, bei welcher zur Bildung der Steckverbindung (7) mittels einer Verzahnung (10) an den Bauteilen (8, 9) eine Außenverzahnung (12) und eine hierzu komplementär ausgebildete Innenverzahnung (11) vorgesehen sind, **dadurch gekennzeichnet, dass** radial außerhalb der Verzahnung (10) an einem Bauteil (8) mehrere über den Umfang verteilte, radial nach innen gerichtete, die Verzahnung (10) radial übergreifende Finger (16) vorgesehen sind, die axial in an dem anderen Bauteil (9) vorgesehene, mittels Zungen (15) zumindest teilweise verdeckte Öffnungen (14) unter Bildung einer elastischen Verspanneinrichtung (13) zur Verspannung der Verzahnung (10) eingreifen.

2. Vorrichtung (1) nach Anspruch 1, **dadurch gekennzeichnet, dass** die Finger (16) an einem einteiligen Blechteil (19) aufgenommen sind, das mit dem Bauteil (8) fest verbunden ist.

3. Vorrichtung (1) nach Anspruch 1 oder 2, **dadurch gekennzeichnet, dass** das die Öffnungen (14) enthaltende Bauteil (9) aus Blech gebildet ist und die Zungen (15) aus den Öffnungen (14) ausgestellt sind.

4. Vorrichtung (1) nach Anspruch 3, **dadurch gekennzeichnet, dass** Zähne (20, 21) der Verzahnung (10) mittels der Finger (16) und der Zungen (15) in Zugrichtung des Antriebsstrangs spielfrei verspannt sind.

5. Vorrichtung (1) nach Anspruch 3 oder 4, **dadurch gekennzeichnet, dass** die Zungen (15) in Umfangsrichtung aus den Öffnungen (14) ausgestellt sind.

6. Vorrichtung (1) nach einem der Ansprüche 1 bis 5, **dadurch gekennzeichnet, dass** in Umfangsrichtung eine Teilung der Finger (16) einer Teilung der Öffnungen (14) entspricht.

7. Vorrichtung (1) nach Anspruch 6, **dadurch gekennzeichnet, dass** die Anzahl der Finger (16) kleiner oder gleich der Anzahl der Öffnungen (14) ist.

8. Vorrichtung (1) nach einem der Ansprüche 1 bis 7, **dadurch gekennzeichnet, dass** axial die Öffnungen (14) durchgreifende Ansätze (17) der Finger (16) eine Einfuhrschräge (25) aufweisen und die Zungen (15) in axiale Richtung schräg gestellt sind.

9. Vorrichtung (1) einem der Ansprüche 1 bis 8, **dadurch gekennzeichnet, dass** die Zungen (15) in Umfangsrichtung elastisch ausgebildet sind.

10. Vorrichtung (1) nach einem der Ansprüche 1 bis 9, **dadurch gekennzeichnet, dass** axial in die Öffnungen (14) eingreifenden Ansätze (17) der Finger (16) in axiale Richtung steif und in Umfangsrichtung und/oder um ihre eigene Achse elastisch ausgebildet sind.

## Claims

1. Device (1) having a plug connection (7) between a drive-side component (8) and an output-side component (9) of a drive train of a motor vehicle, in which device, to form the plug connection (7) by means of interlock (10), an external toothing (12) and an internal toothing (11) formed complementarily thereto are provided on the components (8, 9), **characterized in that** one component (8) has provided on it, radially outside the interlock (10), a plurality of radially inward-directed fingers (16) which are distributed over the circumference and overlap the interlock (10) radially and which engage axially into orifices (14), provided on the other component (9) and concealed at least partially by means of tongues (15), so as to form an elastic bracing device (13) for bracing the interlock (10).

2. Device (1) according to Claim 1, **characterized in that** the fingers (16) are accommodated on a one-part sheet metal part (19) which is firmly connected to the component (8).

3. Device (1) according to Claim 1 or 2, **characterized in that** the component (9) containing the orifices (14) is formed from sheet metal and the tongues (15) are set out from the orifices (14).

4. Device (1) according to Claim 3, **characterized in that** teeth (20, 21) of the interlock (10) are braced, free of play in the traction direction of the drive train, by means of the fingers (16) and the tongues (15).

5. Device (1) according to Claim 3 or 4, **characterized in that** the tongues (15) are set out from the orifices (14) in the circumferential direction.

6. Device (1) according to one of Claims 1 to 5, **characterized in that** a spacing of the fingers (16) corresponds to a spacing of the orifices (14) in the circumferential direction.

7. Device (1) according to Claim 6, **characterized in that** the number of fingers (16) is smaller than or equal to the number of orifices (14).

8. Device (1) according to one of Claims 1 to 7, **characterized in that** extensions (17), passing axially through the orifices (14), of the fingers (16) have a lead-in slope (25) and the tongues (15) are set obliquely in the axial direction.

9. Device (1) according to one of claims 1 to 8, **characterized in that** the tongues (15) are formed elastically in the circumferential direction.

10. Device (1) according to one of Claims 1 to 9, **characterized in that** extensions (17), engaging axially into the orifices (14), of the fingers (16) are formed rigidly in the axial direction and elastically in the circumferential direction and/or about their own axis.

## Revendications

1. Dispositif (1) comprenant une liaison par enfichage (7) entre un composant (8) côté entraînement et un composant (9) côté sortie d'une chaîne cinématique d'un véhicule automobile, dans lequel, pour former la liaison par enfichage (7) au moyen d'un engrenage (10), une denture extérieure (12) et une denture intérieure (11) réalisée de manière complémentaire à celle-ci sont prévues sur les composants (8, 9), **caractérisé en ce que** radialement à l'extérieur de l'engrenage (10), sur un composant (8), plusieurs doigts (16) répartis sur la périphérie, orientés radialement vers l'intérieur et chevauchant radialement l'engrenage (10) sont prévus, lesquels viennent en prise axialement dans des ouvertures (14) prévues sur l'autre composant (9) et recouvertes au moins partiellement au moyen de languettes (15), en formant un dispositif de serrage élastique (13) pour le serrage de l'engrenage (10).

2. Dispositif (1) selon la revendication 1, **caractérisé en ce que** les doigts (16) sont reçus sur une partie en tôle (19) d'un seul tenant, laquelle est reliée fixement au composant (8).

3. Dispositif (1) selon la revendication 1 ou 2, **caractérisé en ce que** le composant (9) comportant les ouvertures (14) est formé à partir de tôle et les languettes (15) font saillie hors des ouvertures (14).

4. Dispositif (1) selon la revendication 3, **caractérisé en ce que** des dents (20, 21) de l'engrenage (10) sont serrées sans jeu dans la direction de traction de la chaîne cinématique au moyen des doigts (16) et des languettes (15).

5. Dispositif (1) selon la revendication 3 ou 4, **caractérisé en ce que** les languettes (15) font saillie hors des ouvertures (14) dans la direction périphérique.

6. Dispositif (1) selon l'une quelconque des revendications 1 à 5, **caractérisé en ce qu'**un pas des doigts (16) correspond à un pas des ouvertures (14) dans la direction périphérique.

7. Dispositif (1) selon la revendication 6, **caractérisé en ce que** le nombre de doigts (16) est inférieur ou égal au nombre d'ouvertures (14).

8. Dispositif (1) selon l'une quelconque des revendications 1 à 7, **caractérisé en ce que** des saillies (17) des doigts (16) venant en prise axialement à travers les ouvertures (14) comprennent un biseau d'insertion (25) et les languettes (15) sont disposées de manière inclinée dans la direction axiale.

9. Dispositif (1) selon l'une quelconque des revendications 1 à 8, **caractérisé en ce que** les languettes (15) sont réalisées de manière élastique dans la direction périphérique.

10. Dispositif (1) selon l'une quelconque des revendications 1 à 9, **caractérisé en ce que** des saillies (17) des doigts (16) venant en prise axialement dans les ouvertures (14) sont réalisées de manière rigide dans la direction axiale et de manière élastique dans la direction périphérique et/ou autour de leur propre axe.
